# FASCICULE DE BREVET EUROPEEN

(11) **EP 1 464 907 B1**
(45) Date de publication et mention de la délivrance du brevet: **28.10.2009**
(21) Numéro de dépôt: 04290751.9
(22) Date de dépôt: 19.03.2004
(51) Int. Cl.: F28D 7/02, F24H 1/44, F28F 1/24

(54) **Échangeur de chaleur hélicoïdal à ailettes et chaudière équipée d'un tel échangeur**
Wendelförmiger Wärmeaustauscher mit Rippen und Heizkessel mit solchem Wärmeaustauscher
Heat exchanger with a finned tube helically coiled and boiler comprising such a heat exchanger

(30) Priorité: 04.04.2003 FR 0304196
(43) Date de publication de la demande: 06.10.2004
(73) Titulaire: Geminox, 29410 Saint Thegonnec (FR)
(72) Inventeur: Kerautret, André, 29230 Landivisiau (FR)
(74) Mandataire: Chambon, Gérard

(56) Documents cités:
- EP-A- 0 027 055
- EP-A- 0 825 392
- BE-A- 471 391
- DE-A- 1 451 291
- DE-A- 2 927 193
- DE-C- 98 473
- FR-A- 2 128 127
- GB-A- 1 481 310
- US-A- 1 524 520

## Description

L'invention concerne un échangeur de chaleur hélicoïdal à ailettes pour fluide caloporteur, et une chaudière équipée d'un tel échangeur.

Il est connu de réaliser une chaudière de chauffage au moyen d'un échangeur dans lequel circule un fluide caloporteur, généralement de l'eau, et autour duquel s'effectuent les échanges thermiques grâce aux gaz de combustion provenant du brûleur.

Le document EP-A-0 027 055 montre par ailleurs un tube muni d'ailettes qui augmentent la surface d'échange et/ou permettent de laminer les gaz de combustion.

Les ailettes se présentent généralement sous la forme de lamelles annulaires régulièrement réparties sur le tube constitutif de l'échangeur.

Afin d'améliorer le rendement d'un échangeur à ailettes, il a aussi été imaginé dans le document US-A-1,524,520 un échangeur à ailettes qui est constitué d'un tube muni sur au moins une partie de sa longueur d'ailettes dont le nombre augmente au fur et à mesure que la zone concernée de l'échangeur s'éloigne du brûleur.

Toutefois dans ce cas, le tube de l'échangeur est aménagé en zigzag dans un plan en formant des étages ou paliers et les ailettes sont régulièrement réparties à chaque étage, seul le nombre d'ailettes variant d'un étage à l'autre.

En vue de concevoir un échangeur de chaleur qui soit encore plus progressif et régulier dans la variation du nombre d'ailettes, l'invention propose un échangeur du type général précité mais qui est notamment remarquable en ce que le tube est enroulé en hélice et en ce que le pas de répartition des ailettes diminue régulièrement et de manière continue le long de l'échangeur de telle sorte que le nombre d'ailettes augmente de manière continue au fur et à mesure que les spires s'éloignent du brûleur.

Par exemple, au moins une portion de la première spire la plus proche du brûleur est dépourvue d'ailette puisqu'à cet endroit la température est la plus élevée, tandis que le tube constitutif de l'échangeur est enroulé selon une hélice cylindrique ou tronconique.

L'invention concerne bien sûr aussi une chaudière munie d'au moins un brûleur et d'un corps dans lequel est aménagé un échangeur de chaleur hélicoïdal à ailettes tel que défini ci-avant.

Selon un mode de réalisation d'une telle chaudière, le brûleur est disposé dans la partie supérieure du corps tandis qu'un pot de récupération des condensats et d'évacuation des gaz de combustion est aménagé sous l'échangeur dans la partie inférieure dudit corps de manière à réaliser ainsi une chaudière à condensation, la condensation étant d'ailleurs ici améliorée grâce au pas variable de répartition des ailettes. Plus particulièrement encore son corps est entouré par une chemise de fluide qui communique avec l'extrémité supérieure de l'échangeur tandis que le retour dans ledit échangeur du fluide caloporteur refroidi s'effectue par une conduite branchée à l'extrémité inférieure de l'échangeur, le départ du fluide réchauffé de l'échangeur étant réalisé au moyen d'une conduite qui débouche dans la partie haute de ladite chemise de fluide.

Avantageusement dans ce cas, entre la conduite de retour du fluide et la partie basse de la chemise de fluide, est prévue une dérivation de telle sorte que ledit fluide se partage au retour entre l'échangeur et la chemise de fluide. De la sorte, on refroidit la partie basse de la chemise de fluide.

La dérivation est par exemple réalisée au moyen d'un petit conduit reliant la conduite de retour du fluide et le bas de la chemise de fluide, ou encore au moyen de la conduite de retour du fluide qui traverse à cet effet la partie inférieure de la chemise de fluide tandis que la partie traversante de ladite conduite est pourvue d'un orifice de passage pour le fluide.

L'invention sera bien comprise à la lecture de la description qui va suivre et qui se réfère aux dessins annexés dans lesquels :
- la figure 1 représente schématiquement une chaudière équipée d'un échangeur hélicoïdal cylindrique selon les figures 4 ou 6,
- la figure 2 représente schématiquement une chaudière équipée d'un échangeur hélicoïdal tronconique selon les figures 5 ou 7,
- la figure 3 montre une dérivation du fluide au niveau de la conduite de retour de la chaudière, qui est une variante par rapport à celle représentée sur les figures 1 et 2.
- les figures 4 et 5 représentent schématiquement des échangeurs selon un premier mode de réalisation dont le tube constitutif est enroulé selon une hélice respectivement cylindrique et tronconique,
- les figures 6 et 7 correspondent aux figures 4 et 5 mais selon un autre mode de réalisation,

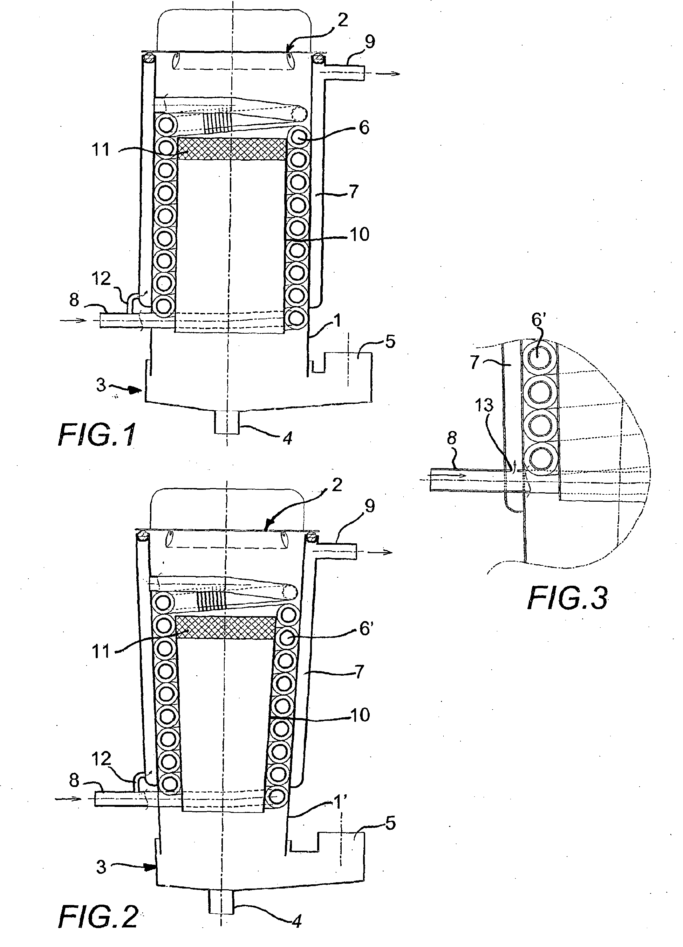

Sur les figures 1 à 3, on peut voir, à titre d'exemple, une chaudière à fluide caloporteur (généralement de l'eau), du type ici à condensation.

La chaudière représentée comporte un corps 1 (figure 1) ou 1' (figure 2) dans la partie haute duquel est aménagé un brûleur 2, ici à flammes renversées, et à la base duquel est disposé un pot 3 récupérateur des condensats et qui est muni ici d'une évacuation 4 pour lesdits condensats et d'une évacuation 5 pour les gaz de combustion.

Dans le corps 1, 1' est disposé un échangeur de chaleur hélicoïdal à tube à ailettes, 6 (figure 1) ou 6' (figure 2) et dont il sera question plus en détail ci-après.

Autour du corps 1, 1' est prévue ici une chemise de fluide 7 tandis que l'échangeur hélicoïdal 6, 6' est alimenté par une conduite 8 de retour du fluide refroidi, qui est branchée à l'extrémité inférieure du tube constitutif dudit échangeur 6, 6', son extrémité supérieure débouchant comme le montrent les figures dans la chemise de fluide 7, celle-ci étant en outre pourvue ici, du côté opposé où débouche l'échangeur 6, 6', d'une conduite 9 de départ du fluide chauffé.

Au centre de l'échangeur 6, 6', est en outre prévu un pot 10 muni d'un isolant 11 (figures 1 et 2).

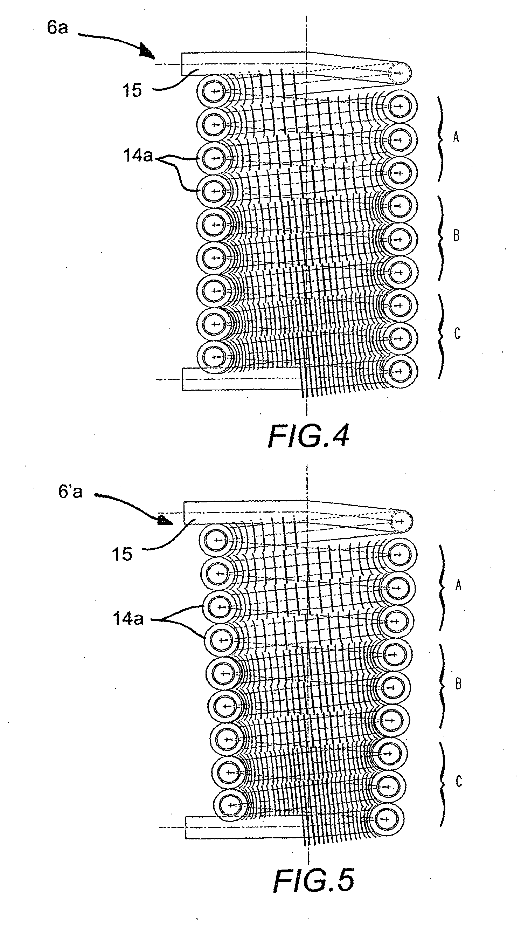

Dans les modes de réalisation représentés, la conduite 8 de retour est de plus pourvue d'une dérivation sous la forme d'un conduit 12 (figures 1 à 4) reliant ladite conduite 8 et la partie inférieure de la chemise de fluide 7, ou sous la forme d'un orifice 13 ménagé dans une partie de la conduite 8 qui traverse alors à cet effet le bas de la chemise de fluide 7 comme le montre la figure 5.

Cette dérivation 12, 13 a pour effet d'alimenter la chemise de fluide 7 avec le fluide de retour et donc de refroidir ladite chemise 7 à sa base afin notamment de favoriser la condensation et le rendement de la chaudière.

Comme le montrent bien les dessins, si le corps 1 de la figure 1 est cylindrique, le corps 1' de la figure 2 est tronconique avec sa partie la plus large tournée vers le brûleur 2. De même, l'échangeur 6, 6' à ailettes est constitué d'un tube enroulé selon une hélice respectivement cylindrique ou tronconique et dans ce dernier cas, sa partie la plus large est tournée vers ledit brûleur 2.

La forme tronconique de l'échangeur 6' présente des avantages du fait notamment de la variation du volume des gaz de combustion en fonction de l'éloignement de la zone correspondante de l'échangeur par rapport au brûleur et du fait en outre d'une meilleure orientation forcée du flux des gaz de combustion vers la chemise de fluide 7, mais l'invention concerne aussi bien une forme cylindrique que tronconique comme il sera expliqué ci-après.

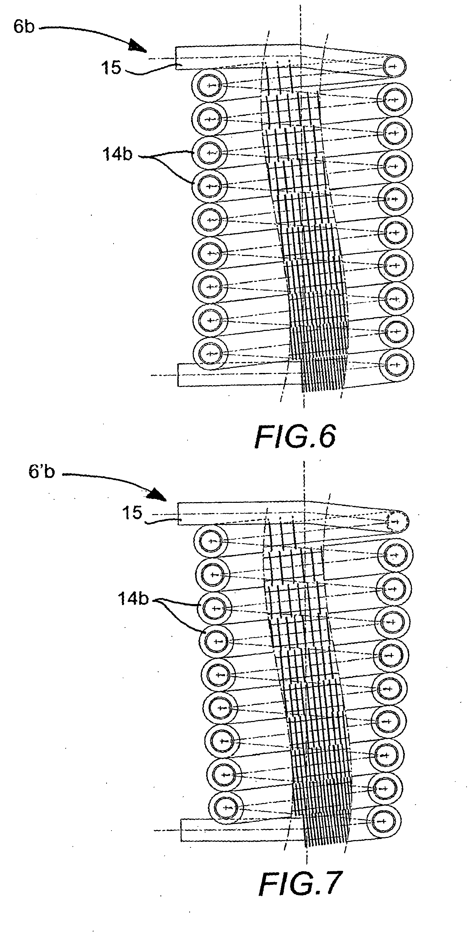

En effet, l'échangeur de référence générale 6 de la figure 1 peut être conçu comme les échangeurs référencés 6a, 6b et représentés plus en détail sur les figures 4 et 6 et l'échangeur 6' de la figure 2, peut être conçu comme les échangeurs 6'a, 6'b des figures 5 et 7.

Les échangeurs 6a et 6b des figures 4 et 6 présentent la même forme hélicoïdale cylindrique mais sont réalisés selon deux modes de réalisation distincts.

De même, les échangeurs 6'a et 6'b des figures 5 et 7 présentent la même forme hélicoïdale tronconique mais sont réalisés selon deux modes de réalisation correspondant respectivement aux échangeurs 6a et 6b, toute forme extérieure mise à part.

Sur les figures 4 et 5, on peut voir des échangeurs 6a, 6'a formés d'un tube hélicoïdal enroulé selon une hélice cylindrique (figure 4), ou tronconique (figure 5), et muni d'ailettes telles que 14a généralement formées chacune par un anneau entourant le tube, lesdites ailettes étant réparties le long dudit tube constitutif, à l'exception toutefois ici d'au moins une partie de la première spire 15 destinée à être la plus proche du brûleur.

On peut voir sur les figures 4 et 5 une répartition originale mais non revendiquée des ailettes 14a.

En effet, le pas de répartition des ailettes 14a varie par paliers ou par ensembles. Dans l'exemple représenté, il y a trois ensembles noté A, B, C comportant ici chacun environ une spire et demi, soit trois hauteurs de tube, les spires avec les ailettes étant ici jointives.

Le pas des ailettes 14a est toutefois constant pour chaque ensemble A, B et C mais il diminue d'un ensemble à l'autre de telle sorte que le nombre d'ailettes augmente au fur et à mesure que ledit ensemble s'éloigne de la première spire, c'est-à-dire que ledit ensemble concerné s'éloigne du brûleur (B possède plus d'ailettes que A et C plus d'ailettes que B). Toutefois, la répartition pourrait être différente, chaque ensemble ayant au moins une portion de spire mais pouvant aller jusqu'à plusieurs spires.

Après avoir décrit les échangeurs des figures 4 et 5, on peut constater que le mode de réalisation selon l'invention des échangeurs 6b et 6'b des figures 6 et 7 se distingue de ceux des échangeurs 6a, 6'a du fait que le pas des ailettes référencées 14b varie ici de manière continue en diminuant de haut en bas de telle sorte que le nombre d'ailettes augmente de manière continue au fur et à mesure que les spires s'éloignent du brûleur.

De la sorte, quel que soit le mode de réalisation choisi (figures 4, 5 ou figures 6, 7), plus on s'éloigne du brûleur, plus les gaz de combustion qui se refroidissent sont laminés par les ailettes dont le nombre augmente.

Au contraire, aux endroits les plus chauds, c'est-à-dire le plus près du brûleur, il n'y a pas d'ailettes, ou moins d'ailettes, réduisant en outre, comme déjà dit, les risques d'entartrage et de fissuration des ailettes.

On comprend bien que l'invention concerne essentiellement l'échangeur, mais aussi toute sorte de chaudière équipée d'un tel échangeur.

A cet effet, il a paru inutile de montrer d'autres chaudières que celles représentées sur les figures 1 et 2, équipées selon l'invention et qui peuvent être bien entendu à condensation ou non, à chemise de fluide ou non.

Par exemple aussi, le brûleur peut être différent et notamment présenter une forme cylindrique avec des flammes latérales, lequel brûleur s'introduisant dans la partie haute de l'échangeur, la conduite de départ pourrait être du même côté que celui où débouche l'extrémité de l'échangeur dans le chemise de fluide, l'isolant central 11 pourrait être plus important pour une meilleure isolation phonique, etc.

## Revendications

1. Echangeur de chaleur (6b,6'b) à ailettes (14b) pour fluide caloporteur, qui est destiné à équiper une chaudière munie d'au moins un brûleur (2) et qui est constitué d'un tube muni sur au moins une partie de sa longueur d'ailettes (14b) dont le nombre augmente au fur et à mesure que la zone concernée de l'échangeur s'éloigne du brûleur, **caractérisé en ce que** le tube est enroulé en hélice et **en ce que** le pas de répartition des ailettes diminue régulièrement et de manière continue le long de l'échangeur, de telle sorte que le nombre d'ailettes augmente de manière continue au fur et à mesure que les spires s'éloignent du brûleur.

2. Echangeur de chaleur hélicoïdal selon la revendication 1, **caractérisé en ce qu'**au moins une portion de la première spire (15) la plus proche du brûleur est dépourvue d'ailettes.

3. Echangeur de chaleur hélicoïdal (6b) selon l'une des revendications 1 ou 2, **caractérisé en ce que** le tube constitutif de l'échangeur est enroulé selon une hélice cylindrique.

4. Echangeur de chaleur hélicoïdal (6'b) selon l'une des revendications 1 ou 2, **caractérisé en ce que** le tube constitutif de l'échangeur est enroulé selon une hélice tronconique.

5. Chaudière de chauffage à fluide caloporteur munie d'au moins un brûleur (2) et d'un corps (1,1') dans lequel est aménagé un échangeur (6,6') de chaleur hélicoïdal à ailettes selon l'une des revendications 1 à 4.

6. Chaudière de chauffage selon la revendication 5, **caractérisée en ce que** le brûleur (2) est disposé dans la partie supérieure du corps (1,1') tandis qu'un pot (3) de récupération des condensats et d'évacuation des gaz de combustion est aménagé sous l'échangeur dans la partie inférieure dudit corps.

7. Chaudière selon l'une des revendications 5 ou 6, **caractérisée en ce que** son corps (1,1') est entouré par une chemise (7) de fluide qui communique avec l'extrémité supérieure de l'échangeur (6,6') tandis que le retour dans ledit échangeur du fluide caloporteur refroidi s'effectue par une conduite (8) branchée à l'extrémité inférieure de l'échangeur, le départ du fluide réchauffé de l'échangeur étant réalisé au moyen d'une conduite (9) qui débouche dans la partie haute de ladite chemise (7) de fluide.

8. Chaudière selon la revendication 7, **caractérisée en ce qu'**entre la conduite (8) de retour du fluide et la partie basse de la chemise (7) de fluide, est prévue une dérivation (12,13) de telle sorte que ledit fluide se partage au retour entre l'échangeur (6,6') et la chemise (7) de fluide.

9. Chaudière selon la revendication 8, **caractérisée en ce que** la dérivation est réalisée au moyen d'un petit conduit (12) reliant la conduite (8) de retour du fluide et le bas de la chemise (7) de fluide.

10. Chaudière selon la revendication 8, **caractérisée en ce que** la dérivation est réalisée au moyen de la conduite (8) de retour du fluide qui traverse à cet effet la partie inférieure de la chemise (7) de fluide tandis que la partie traversante de ladite conduite est pourvue d'un orifice (13) de passage pour le fluide.

## Claims

1. A heat exchanger (6b,6'b) with fins (14b) for heat-transfer fluid, which is designed for fitting to a boiler provided with at least one burner (2) and which consists of a tube provided over at least part of its length with fins (14b), which increase in number the further away is the zone in question of the exchanger from the burner, **characterised in that** the tube is wound helically and **in that** the pitch of distribution of the fins decreases regularly and continuously along the exchanger, such that the number of fins increases continuously the further away the turns are from the burner.

2. A helical heat exchanger according to claim 1, **characterised in that** at least a portion of the first turn (15) closest to the burner has no fins.

3. A helical heat exchanger (6b) according to one of claims 1 or 2, **characterised in that** the tube of which the exchanger consists is wound in a cylindrical helix.

4. A helical heat exchanger (6'b) according to one of claims 1 or 2, **characterised in that** the tube of which the exchanger consists is wound in a frustoconical helix.

5. A heat-transfer fluid heating boiler provided with at least one burner (2) and with a body (1, 1') in which there is provided a helical finned heat exchanger (6, 6') according to one of claims 1 to 4.

6. A heating boiler according to claim 5, **characterised in that** the burner (2) is disposed in the upper part of the body (1, 1') while a sump (3) for condensate recovery and for evacuation of the combustion gases is provided under the exchanger in the lower part of said body.

7. A boiler according to one of claims 5 or 6, **characterised in that** the body (1, 1') thereof is surrounded by a fluid jacket (7) which is in communication with the upper end of the exchanger (6, 6') while the cooled heat-transfer fluid is returned to said exchanger via a duct (8) connected to the lower end of the exchanger, outflow of the reheated fluid from the exchanger being brought about by means of a duct (9) which opens into the top part of said fluid jacket (7).

8. A boiler according to claim 7, **characterised in that** a branch (12, 13) is provided between the duct (8) for returning the fluid and the bottom part of the fluid jacket (7), such that said fluid is divided on return between the exchanger (6, 6') and the fluid jacket (7).

9. A boiler according to claim 8, **characterised in that** the branch takes the form of a small pipe (12) connecting the fluid return duct (8) and the bottom of the fluid jacket (7).

10. A boiler according to claim 8, **characterised in that** the branch is brought about by the fluid return duct (8) passing to this end through the lower part of the fluid jacket (7), the part of said duct passing through the jacket being provided with an orifice (13) for passage of the fluid.

## Patentansprüche

1. Wärmetauscher (6b, 6'b) mit Rippen (14b) für ein Wärmetransportfluid für den Einsatz in einem Heizkessel mit mindestens einem Brenner (2), gefertigt aus einem Rohr, das an zumindest einem Teil seiner Länge Rippen (14b) aufweist, deren Anzahl steigt, je weiter der betreffende Bereich des Tauschers von dem Brenner entfernt ist, **gekennzeichnet durch** die wendelförmige Wicklung des Rohres und **durch** die Aufteilung der Rippen, gemäß der der Aufteilungsabstand der Rippen gleichmäßig und kontinuierlich entlang des Tauschers abnimmt, so dass die Anzahl der Rippen kontinuierlich mit dem Abstand der Windungen von dem Brenner zunimmt.

2. Wendelförmiger Wärmetauscher nach Anspruch 1, **dadurch gekennzeichnet, dass** zumindest ein Abschnitt der ersten Windung (15), die dem Brenner am nächsten liegt, keine Rippen aufweist.

3. Wendelförmiger Wärmetauscher (6b) nach Anspruch 1 oder 2, **dadurch gekennzeichnet, dass** das Rohr, aus dem der Tauscher gefertigt ist, als zylindrische Wendel gewickelt ist.

4. Wärmetauscher (6'b) nach einem der Ansprüche 1 oder 2, **dadurch gekennzeichnet, dass** das Rohr, aus dem der Tauscher gefertigt ist, als kegelförmige Wendel gewickelt ist.

5. Heizkessel mit Wärmetransportfluid mit zumindest einem Brenner (2) und einem Korpus(1, 1'), in dem sich ein wendelförmiger Wärmetauscher (6,6') nach einem der Ansprüche 1 bis 4 befindet.

6. Heizkessel nach Anspruch 5, **dadurch gekennzeichnet, dass** der Brenner (2) in dem oberen Bereich des Korpus (1, 1') angebracht ist, während ein Auffangbehälter (3) für Kondensate und zur Abführung der Verbrennungsgase unter dem Tauscher an dem unteren Bereich des Korpus angebracht ist.

7. Heizkessel nach einem der Ansprüche 5 oder 6, **dadurch gekennzeichnet, dass** sein Korpus (1, 1') von einer Fluidkammer (7) umgeben ist, die mit dem oberen Ende des Tauschers (6,6') kommuniziert, während der Rücklauf des abgekühlten Fluids in den Tauscher mittels einer Rückführzuleitung (8), die an dem unteren Ende des Tauschers angeschlossen ist, erfolgt, wobei der Ablauf des erwärmten Fluids aus dem Tauscher mittels einer Zuleitung (9) erfolgt, die an dem oberen Bereich der Fluidkammer (7) angeschlossen ist.

8. Heizkessel nach Anspruch 7, **dadurch gekennzeichnet, dass** zwischen der Rückführzuleitung (8) des Fluidrücklaufs und dem unteren Bereich der Fluidkammer (7) eine Ableitung (12, 13) vorgesehen ist, so dass sich das Fluid beim Rücklauf zwischen dem Tauscher (6, 6') und der Fluidkammer (7) aufteilt.

9. Heizkessel nach Anspruch 8, **dadurch gekennzeichnet, dass** die Ableitung durch ein kleines Rohr (12) erfolgt, das die Rückführzuleitung (8) des Fluidrücklaufs mit dem unteren Ende der Fluidkammer (7) verbindet.

10. Heizkessel nach Anspruch 8, **dadurch gekennzeichnet, dass** die Ableitung mittels der Rückführzuleitung (8) des Fluidrücklaufs erfolgt, die zu diesem Zweck den unteren Bereich der Fluidkammer (7) durchquert, wobei der Bereich der Zuleitung, der die Fluidkammer durchquert, eine Öffnung (13) für den Durchlass des Fluids aufweist.
